# EUROPEAN PATENT APPLICATION

(11) **EP 2 026 523 A1**
(43) Date of publication of application: **18.02.2009**
(21) Application number: 07015907.4
(22) Date of filing: 13.08.2007
(51) Int. Cl.: H04L 29/06, H04L 12/56

(54) **Method and device for piggybacked status PDU with flexible lenght RLC PDU**

(71) Applicant: Nokia Siemens Networks Oy, 02610 Espoo (FI)
(72) Inventor: Unteregger, Burghard, 1040 Wien (AT)
(74) Representative: Bruglachner, Thomas E.

(57) **Abstract**

The present invention provides a method for adding a piggybacked status Protocol Data Unit, PDU, to a Radio Link Control, RLC, PDU comprising a payload and a header including a Header Extension, HE, field, the method comprising adding an additional Header Extension, aHE, field to said RLC PDU, wherein said aHE field corresponds to said HE field, adding a piggybacked status PDU to said RLC PDU, and setting said HE field to a pre-determined value to indicate the presence of said aHE field and said piggybacked status PDU.

The invention also provides a method for processing such RLC PDUs and devices for performing the inventive methods.

## Description

The present invention relates to methods and devices for the addition of piggybacked status Protocol Data Units (PDUs) to Radio Link Control (RLC) PDUs with flexible length.

### Prior Art

With the currently defined header structure of RLC PDUs there are basically two cases relating to the addition of status PDUs to RLC PDUs with flexible size.

In a first case the RLC PDU is filled completely by a service data unit (SDU) from another protocol layer, or with segments of the SDU in case the SDU has to be segmented due to a too small maximum PDU size. No length is indicated in the header of the RLC PDU. The correct reception of the PDU will be based on size/length information delivered from lower protocol layers (e.g. Media Access Control layer MAC). As no size information can be derived from the RLC PDU itself, no padding or supplementary information like piggybacked status information can be included, because the receiver would not be able to separate it from the actual payload.

This approach has the advantage of keeping the RLC header size as low as 2 octets (data/control D/C, sequence number SN, header extension HE). However, the drawback is that no status information can be added, like piggy backed status information.

In a second case the RLC PDU is also filled completely by a SDU from another protocol layer, or with segments of the SDU in case the SDU has to be segmented due to a too small maximum PDU size, and additional information (piggybacked status information) is added. The size of the payload of the PDU is indicated by one or more length indicators (LIs). The correct reception of the PDU will be based on size/length information delivered from lower protocol layers (e.g. MAC).

LIs have to be at least 11 bits long, because of the size of the payload (1500 octets for maximum transfer unit MTU). The 15 bit LIs with a HE bit are re-used for the downlink DL (and could be probably re-used for the uplink UL too), because of octed-alignment.

If the size indicated by the MAC is larger than the total length indicated by the LI(s), the RLC receiver can conclude that additional information has to be included in the RLC PDU. The excess information can be considered as piggybacked status information, as padding will never be used.

As an advantage this approach enables to omit padding. It makes possible to use concatenation of more than one PDU, however every PDU will need a LI. The inclusion of piggybacked status information to the PDU is in principle possible. However, the RLC header will be 3 or 4 octets: at least 2 octets will be added to D/C, SN, HE, for the LI indicating the payload size for payloads larger than 128 octets, 1 octet for payloads smaller than 128 octets, depending on the configuration.

It can be seen that either no piggybacked status information can be added at all, or a full RLC payload size indicator is required. Depending on the configuration of the RLC the LI adds 1 or 2 octets. Therefore piggybacked status information has previously not been used in conjunction with flexible RLC PDU sizes.

### Summary of the invention

According to a first aspect a method is provided for adding a piggybacked status Protocol Data Unit, PDU, to a Radio Link Control, RLC, PDU comprising a payload and a header including a Header Extension, HE, field, the method comprising
- adding an additional Header Extension, aHE, field to said RLC PDU, wherein said aHE field corresponds to said HE field;
- adding a piggybacked status PDU to said RLC PDU; and
- setting said HE field to a pre-determined value to indicate the presence of said aHE field and said piggybacked status PDU.
   The present invention provides means to add piggybacked status PDUs to flexible length RLC PDUs. It can also provide a reduced overhead, compared to the transmission of complete standalone status PDUs or the use of full-length LIs as described above. Compatibility with further operations is maintained through the provision of an additional header aHE.
   It is to be noted that the term that aHE field is "corresponding" to the HE field is to be understood such that it has the same format/size and can be used/is interpreted like the HE field. Operations like concatenation/segmentation that involve using the HE field together with Length Indicators (LI) can be performed as usual. The HE field is set to a pre-determined value, e.g. a reserved value like (11), to indicate that the aHE and the piggybacked status PDU are present.
   According to an exemplary embodiment said piggybacked status PDU is added before said payload, the method further comprising
- providing said piggybacked status PDU with a super field, SUFI, indicating the length of said piggybacked status PDU.
   A "NO MORE" or "ACK" super field can be used to indicate the end of the status data. The receiver of the respective RLC PDU is thus able to derive the size of the piggybacked status PDU. This in turn enables the receiving entity to derive the size of the actual data payload and process the RLC PDU. In detail, the receiving entity will have knowledge of the start of the piggybacked status data which begin after the aHE field and end at the provided SUFI (NO MORE/ACK). The SUFI is then followed by the actual payload data, directly or with intermediary padding bits which may be required to achieve octet-alignment. This alternative embodiment might be regarded as a "self-indication" of the piggybacked status PDU size.
   According to an exemplary embodiment said piggybacked status PDU is added after said payload, the method further comprising
- adding a short Length Indicator, sLI, to said RLC PDU, indicating the length of said piggybacked status PDU.
   This is an alternative, solution for indicating the length of the piggybacked status PDU, including an explicit indication of the piggybacked status PDU length. In this way the receiving entity is able to derive the payload size and process the RLC PDU. In an exemplary embodiment the sLI may have a length of 6 bits, which is enough to indicate the length of piggybacked status PDU up to 64 octets. Together with an aHE having 2 bits the RLC PDU would then remain octet-aligned.
   According to an exemplary embodiment the method further comprises
- padding said piggybacked status PDU.
   This may be used to maintain octet-alignment. In case of an embodiment making use of the sLI the padding bits will be located at the end of the piggybacked status PDU, in the case of an embodiment making use of the implicit SUFI length indication the padding bits will be located after the SUFI.
   According to an exemplary embodiment the method further comprises
- performing at least one further operation on said RLC PDU that would involve setting said HE field to a functional value; and
- setting said aHE field to said functional value instead of said HE field.
   An example for such an operation is concatenation/segmentation by the use of LIs. Instead of using the HE field (which is set to a pre-determined value according to the invention) the functional value to be used can be written to the aHE field instead. Otherwise the operation can be performed as with the RLC PDU.
   According to an exemplary embodiment
- said piggybacked status PDU comprises a header; and
- said aHE field is added by re-using bits of said header of said piggybacked status PDU.
   This allows a further optimization. Since the header of a legacy piggybacked status PDU contains a reserved bit (R2) and the three-bit PDU type field is restricted to "000", it is to be noted that by re-using 2 bits for the aHE the overhead can be reduced to 4 bits for the SUFI (ACK/NO MORE). The PDU type could further be omitted altogether, since it can be pre-defined to "0", thus reducing the overhead to 2 bits. Depending on the need for padding the overhead can so be kept very low in many cases.
   According to a second aspect of the invention a method is provided for processing a Radio Link Control, RLC, PDU, formed in accordance with the invention, the method comprising
- receiving an RLC PDU comprising a payload section and a header section including a Header Extension, HE, field;
- receiving size information related to said RLC PDU;
- if said HE field is set to a pre-determined value indicating the presence of a piggybacked status PDU in said RLC PDU
- determining the size of said piggybacked status PDU; and
- determining the size of said payload based on said received size information and said determined piggybacked status PDU size.

This method can be performed by an RLC receiving entity to process the RLC PDU. The size-related information can be received from another layer, e.g. the Media Access Control layer MAC.

### According to an exemplary embodiment

- said piggybacked status PDU is located before said payload and includes a super field, SUFI, indicating the length of said piggybacked status PDU; and
- determining the size of said piggybacked status PDU is based on said SUFI.
   According to an exemplary embodiment
- said piggybacked status PDU is located after said payload;
- said RLC PDU comprises a short Length Indicator, sLI, indicating the length of said piggybacked status PDU; and
- said determining of the size of said piggybacked status PDU is based on said sLI.
   According to an exemplary embodiment
- said piggybacked status PDU comprises padding; and
- said determining of the size of said payload is further based on said padding.
   According to an exemplary embodiment said HE field being set to a pre-determined value further indicates the presence of an aHE field, the method further comprising
- performing at least one further processing operation on said RLC PDU that would involve reading out a functional value from said HE field; and
- reading out said functional value from said aHE field instead of said HE field.
   According to an exemplary embodiment
- said piggybacked status PDU comprises a header; and
- said aHE field is read out from said header of said piggybacked status PDU.
   According to a third aspect of the invention a computer program product is provided comprising program code for carrying out the above-mentioned method when said program product is run on an electronic device.
   According to a fourth aspect of the invention a device is provided for adding a piggybacked status Protocol Data Unit, PDU, to a Radio Link Control, RLC, PDU comprising a payload section and a header section including a Header Extension, HE, field, the device comprising
- means for adding an additional Header Extension, aHE, field to said RLC PDU, wherein said aHE field corresponds to said HE field;
- means for adding a piggybacked status PDU to said RLC PDU; and
- means for setting said HE field to a pre-determined value to indicate the presence of said aHE field and said piggybacked status PDU.
   According to an exemplary embodiment the device comprises
- means for adding said piggybacked status PDU before said payload; and
- means for providing said piggybacked status PDU with a super field, SUFI, indicating the length of said piggybacked status PDU.
   According to an exemplary embodiment the device comprises
- means for adding a short Length Indicator, sLI, to said RLC PDU, indicating the length of said piggybacked status PDU; and
- means for adding said piggybacked status PDU after said payload.

### According to an exemplary embodiment the device comprises

- means for padding said piggybacked status PDU.
   According to an exemplary embodiment the device comprises
- means for performing at least one further operation on said RLC PDU that would require setting said HE field to a functional value; and
- means for using said aHE field instead of said HE field for setting said functional value.
   According to an exemplary embodiment the device comprises
- means for adding said aHE field by re-using bits of a header of said piggybacked status PDU.
   According to a fifth aspect of the invention a device is provided for processing a Radio Link Control, RLC, PDU, comprising
- means for receiving an RLC PDU comprising a payload section and a header section including a Header Extension, HE, field;
- means for receiving size information related to said RLC PDU;
- means for determining the size of said piggybacked status PDU, if said HE field is set to a pre-determined value indicating the presence of a piggybacked status PDU in said RLC PDU; and
- means for determining the size of said payload based on said received size information and said determined piggybacked status PDU size.
   According to an exemplary embodiment said piggybacked status PDU is located before said payload, the device comprising
- means for determining the size of said piggybacked status PDU based on a SUFI included in and indicating the length of said piggybacked status PDU.
   According to an exemplary embodiment the device comprises
- means for determining of the size of said piggybacked status PDU based on an sLI included in said RLC PDU and indicating the length of said piggybacked status PDU, wherein said piggybacked status PDU is located after said payload.
   According to an exemplary embodiment said piggybacked status PDU comprises padding, the device comprising
- means for determining the size of said payload based on said padding.
   According to an exemplary embodiment said HE field being set to a pre-determined value further indicates the presence of an aHE field, the device comprising
- means for performing at least one further processing operation on said RLC PDU that would invole reading out a functional value from said HE field; and
- means for reading out said functional value from said aHE field instead of said HE field.
   According to an exemplary embodiment said piggybacked status PDU comprises a header, the device comprising
- means for reading out said aHE field from said header of said piggybacked status PDU.

### Brief description of the drawings

The invention can be more fully understood by the following detailed description of exemplary embodiments, when also referring to the drawings, which are provided in an exemplary manner only and are not intended to limit the invention to any particular embodiment illustrated therein. In the drawings
Fig. 1 illustrates a first embodiment of the invention; and
Fig. 2 illustrates a second embodiment of the invention.

### Detailed description of the invention

In the following some technological background for the present invention shall be explained shortly.

An Acknowledged Mode Data (AMD) PDU is used to convey sequentially numbered PDUs containing RLC SDU data. AMD PDUs are used by RLC when it is configured for acknowledged data transfer. An AMD PDU is used to transfer user data, piggybacked status information and the polling bit when the RLC is operating in acknowledged mode. The length of the data part shall be a multiple of 8 bits. The AMD PDU header consists of the first two octets, which contain the "Sequence Number". The RLC header consists of the first two octets and all octets that contain "Length Indicators".

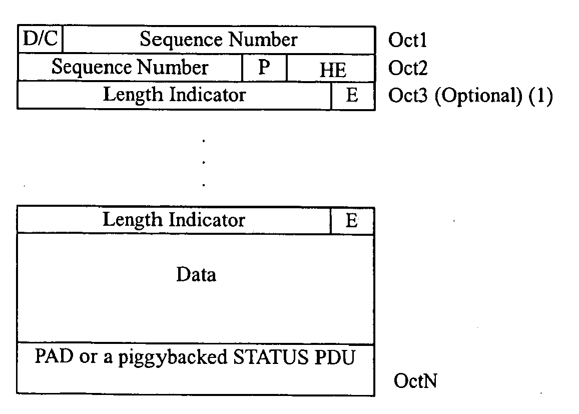

The "Length Indicator" may be 15 bits.

A STATUS PDU is used to exchange status information between two RLC AM entities. The format of the STATUS PDU is given below. The length of each super field (SUFI) is dependent on its type and contents.

| | | | |
|---|---|---|---|
| D/C | PDU type | SUFI₁ | Oct 1 |
| SIJFI₁ | | | Oct2 |
| ··· | | | |
| SUFI_{K} | | | |
| PAD | | | OctN |

A STATUS PDU can include super-fields of different types. The size of a STATUS PDU is variable and upper bounded by the maximum RLC PDU size used by the logical channel on which the control PDUs are sent. If fixed RLC PDU size has been configured by upper layers, padding shall be included to match one of the PDU sizes used by the logical channel on which the control PDUs are sent. The length of the STATUS PDU shall be a multiple of 8 bits. If flexible RLC PDU size has been configured by upper layers padding is only included to make the length of the STATUS PDU a multiple of 8 bits.

The format of a piggybacked STATUS PDU is the same as for the STATUS PDU except that the D/C field is replaced by a reserved bit (R2). This PDU can be piggybacked in an AMD PDU if the data leaves out enough room in the AMD PDU. The PDU Type field is set to "000" and all other values are invalid.

The D/C field has a length of 1 bit and indicates the type of an AMD PDU. It can be either data or control PDU. The PDU Type field has a length of 3 bit. The PDU type field indicates the control PDU type. The Sequence Number (SN) field indicates the "Sequence Number" of the RLC PDU, encoded in binary. The Polling bit (P) field has a length of 1 bit. This field is used to request a status report (one or several STATUS PDUs) from the receiver.

The Header Extension Type (HE) field has a length of 2 bits. This two-bit field indicates if the next octet is data or a "Length Indicator" and E bit.

| | |
|---|---|
| **Value** | **Description** |
| **00** | The succeeding octet contains data |
| **01** | The succeeding octet contains a length indicator and E bit |
| **10** | If "Use special value of the HE field" is configured, the succeeding octet contains data and the last octet of the PDU is the last octet of an SDU. Otherwise, this coding is reserved. |
| **11** | Reserved |

The Extension bit (E) field has a length of 1bit. In the AMD PDU, the "Extension bit" always has the following interpretation:

| | |
|---|---|
| **Bit** | **Description** |
| **0** | The next field is data, piggybacked STATUS PDU or padding |
| **1** | The next field is Length Indicator and E bit |

Unless the HE field indicates that an AMD PDU contains the last octet of the RLC SDU, a "Length Indicator" (LI) is used to indicate the last octet of each RLC SDU ending within the PDU. If the HE field indicates that an AMD PDU contains the last octet of the SDU, no LIs are present in this RLC PDU.

A Super Field (SUFI) can include three sub-fields: type information (type of super-field, e.g. list, bitmap, acknowledgement, etc.), length information (providing the length of a variable length field within the following value field) and a value:

| |
|---|
| Type |
| Length |
| Value |

The length of the type field is 4 bits and it may have any of following values:

| **Bit** | **Description** |
|---|---|
| **000 0** | No More Data **(NO_MORE)** |
| **000 1** | Window Size **(WINDOW)** |
| **001 0** | Acknowledgement **(ACK)** |
| **001 1** | List **(LIST)** |
| **010 0** | Bitmap **(BITMAP)** |
| **010 1** | Relative list **(Rlist)** |
| **011 0** | Move Receiving Window **(MRW)** |
| **011 1** | Move Receiving Window Acknowledgement **(MRW_ACK)** |
| **100 0** | Poll **(POLL)** |
| **100 1- 111 1** | Reserved |

The 'No More Data' super-field indicates the end of the data part of a STATUS PDU. It shall always be placed as the last SUFI if it is included in a STATUS PDU. All data after this SUFI shall be regarded as padding and shall be neglected.

The 'Acknowledgement' super-field consists of a type identifier field (ACK) and a sequence number (LSN). The acknowledgement super-field is also indicating the end of the data part of a STATUS PDU. Thus, no 'NO_MORE' super-field is needed in the STATUS PDU when the 'ACK' super-field is present. The ACK SUFI shall always be placed as the last SUFI if it is included in a STATUS PDU. All data after this SUFI shall be regarded as padding and shall be neglected.

The reserved 2 (R2) bit in the piggybacked STATUS PDU is used to make the piggybacked STATUS PDU a multiple of 8 bits in length and for this purpose it is coded as 0. Otherwise the PDU is treated as invalid and hence shall be discarded.

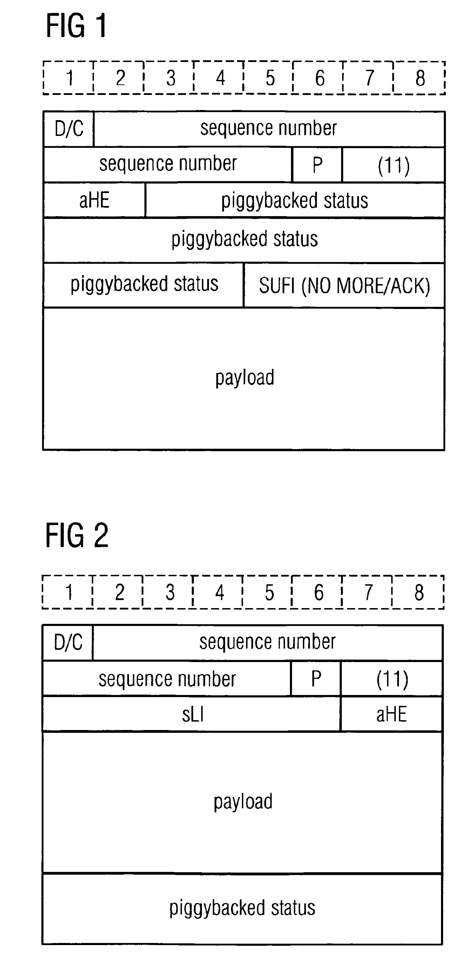

Fig. 1 shows a first embodiment of the invention. The header/PDU structure suggested by the invention is octet-aligned, i.e. 8 bits wide. It comprises the D/C field (1 bit), a sequence number, a polling field P (1 bit) and a Header Extension field (2 bit). Up to here the data structure comprises the usual elements. However, according to the present invention the Header Extension field (2 bits) is set to a pre-determined value, here (11). This value indicates the presence of an additional Header Extension field aHE, which corresponds to the HE field with respect to size/format (2 bits) as well as its interpretation. The pre-determined HE field value further indicates, according to the present invention, the presence of a piggybacked status PDU, which starts after the aHE field.

In this particular embodiment the piggybacked status PDU is thus inserted between the header and the payload section of the RLC PDU. In order to enable the receiver to correctly process the payload it is therefore necessary to provide a possibility to derive the size of the payload. The invention proposes to use a super field SUFI of type "NO MORE" or "ACK" that is included in the piggybacked status PDU to achieve this.

The receiver can so first determine the piggybacked status PDU size, starting from the aHE field and ending at the SUFI. This can be understood as a kind of "self-defining" size option, as the size can be derived from the piggybacked status information itself. In case padding is used to maintain octet-alignment, there will also be some padding bits after the SUFI and before the payload, which can easily be determined by the receiver if the SUFI does not end at an octet boundary. The RLC PDU size will be provided by to the receiver by another layer, e.g. the correct reception of the PDU will be based on size information delivered by the Media Access Control layer, MAC, and together with the size of the piggybacked status PDU it is now able to determine the payload size and process it accordingly.

Further operations like concatenation and/or segmentation remain operable with the invention. Instead of using the HE field the new aHE field can be used in conjunction with the known Length Indicators LI. In other words, the present invention allows maintaining full compatibility with these known operations.

This embodiment can also be improved further by making the following optimizations. Since the header of legacy piggybacked status information contains a reserved bit and also the PDU type is restricted to "000", it should be noted that by re-using 2 bits for the HE the overhead can be reduced to 4 bits for the SUFI (ACK/NO MORE). This would only take effect if piggybacked status is used in this context. Also the PDU type could be further omitted since it is pre-defined to 0, this reducing the overhead to 2 bits. Depending on the need for padding the overhead may for many cases be reduced to virtually zero.

Compared to the conventional solution of using a complete separate status PDU, or using piggybacked status information together with full-length LIs, the invention provides the following advantages with this embodiment. It allows adding piggybacked status information to all types of RLC PDUs. The additional RLC header overhead can be reduced to 2 bits or even 0 bits for many cases when the piggybacked status information is added. In order to achieve these advantages it requires the use of the reserved HE value.

Fig. 2 shows a second embodiment of the invention. The header/PDU structure suggested by the invention is octet-aligned, i.e. 8 bits wide. It comprises the D/C field (1 bit), a sequence number, a polling field P (1 bit) and a Header Extension field (2 bit). Up to here the data structure comprises the usual elements. However, according to the present invention the Header Extension field (2 bits) is set to a pre-determined value, here (11).

This value indicates, according to the present invention, the presence of a Short Length Indicator sLI for a piggybacked status PDU and an additional Header Extension field aHE, which corresponds to the HE field with respect to size/format (2 bits) as well as its interpretation. If 6 bits for the sLI are regarded as being enough for indicating the length of the piggyback status information (which would allow a maximum size of 64 octets), together with the 2 bits for the aHE the RLC header in total will remain octet-aligned.

In this particular embodiment the piggybacked status PDU is inserted after the payload section of the RLC PDU. In order to enable the receiver to correctly process the payload it is therefore necessary to provide a possibility to derive the size of the payload, which starts after the aHE field and ends at the start of the piggybacked status PDU. The receiver can determine the piggybacked status PDU size from the sLI. This can be understood as a kind of "explicitly defined" size option, as the size can be derived from the sLI directly.

The RLC PDU size will be provided by to the receiver by another layer, e.g. the correct reception of the PDU will be based on size information delivered by the Media Access Control layer, MAC, and together with the size of the piggybacked status PDU it is now able to determine the payload size and process it accordingly.

Further operations like concatenation and/or segmentation remain operable with the invention. Instead of using the HE field the new aHE field can be used in conjunction with the known Length Indicators LI. In other words, the present invention allows maintaining full compatibility with these known operations.

This embodiment provides the advantage that piggybacked status information can be added to all RLC PDUs. The additional RLC overhead will be 1 octet in case piggybacked status information is present and 0 otherwise. This embodiment requires the use of a reserved HE value.

The invention provides the advantage of reduced overhead of PDUs (RLC header and MAC header) for added piggybacked status information, compared to the conventional way of providing a complete stand-alone status PDU, or being forced to use full-length LIs for piggybacked status information. This generally reduces the waste of radio resources in the DL/UL.

Particularly in power-limited upload situations reducing the overhead as much as possible can be essential.

## Claims

1. Method for adding a piggybacked status Protocol Data Unit, PDU, to a Radio Link Control, RLC, PDU comprising a payload and a header including a Header Extension, HE, field, the method comprising
- adding an additional Header Extension, aHE, field to said RLC PDU, wherein said aHE field corresponds to said HE field;
- adding a piggybacked status PDU to said RLC PDU; and
- setting said HE field to a pre-determined value to indicate the presence of said aHE field and said piggybacked status PDU.

2. Method according to claim 1, wherein said piggybacked status PDU is added before said payload, the method further comprising
- providing said piggybacked status PDU with a super field, SUFI, indicating the length of said piggybacked status PDU.

3. Method according to claim 1, wherein said piggybacked status PDU is added after said payload, the method further comprising
- adding a short Length Indicator, sLI, to said RLC PDU, indicating the length of said piggybacked status PDU.

4. Method according to anyone of claims 1 to 3, further comprising
- padding said piggybacked status PDU.

5. Method according to anyone of the preceding claims, further comprising
- performing at least one further operation on said RLC PDU that would involve setting said HE field to a functional value; and
- setting said aHE field to said functional value instead of said HE field.

6. Method according to anyone of the preceding claims, wherein
- said piggybacked status PDU comprises a header; and
- said aHE field is added by re-using bits of said header of said piggybacked status PDU.

7. Method for processing a Radio Link Control, RLC, PDU, comprising
- receiving an RLC PDU comprising a payload section and a header section including a Header Extension, HE, field;
- receiving size information related to said RLC PDU;
- if said HE field is set to a pre-determined value indicating the presence of a piggybacked status PDU in said RLC PDU
- determining the size of said piggybacked status PDU; and
- determining the size of said payload based on said received size information and said determined piggybacked status PDU size.

8. Method according to claim 7, wherein
- said piggybacked status PDU is located before said payload and includes a super field, SUFI, indicating the length of said piggybacked status PDU; and
- determining the size of said piggybacked status PDU is based on said SUFI.

9. Method according to claim 7, wherein
- said piggybacked status PDU is located after said payload;
- said RLC PDU comprises a short Length Indicator, sLI, indicating the length of said piggybacked status PDU; and
- said determining of the size of said piggybacked status PDU is based on said sLI.

10. Method according to anyone of claims 7 to 9, wherein
- said piggybacked status PDU comprises padding; and
- said determining of the size of said payload is further based on said padding.

11. Method according to anyone of claims 7 to 10, wherein said HE field being set to a pre-determined value further indicates the presence of an aHE field, further comprising
- performing at least one further processing operation on said RLC PDU that would involve reading out a functional value from said HE field; and
- reading out said functional value from said aHE field instead of said HE field.

12. Method according to claim 11, wherein
- said piggybacked status PDU comprises a header; and
- said aHE field is read out from said header of said piggybacked status PDU.

13. Computer program product comprising program code for carrying out the method of anyone of claims 1 to 12 when said program product is run on an electronic device.

14. Device for adding a piggybacked status Protocol Data Unit, PDU, to a Radio Link Control, RLC, PDU comprising a payload section and a header section including a Header Extension, HE, field, the device comprising
- means for adding an additional Header Extension, aHE, field to said RLC PDU, wherein said aHE field corresponds to said HE field;
- means for adding a piggybacked status PDU to said RLC PDU; and
- means for setting said HE field to a pre-determined value to indicate the presence of said aHE field and said piggybacked status PDU.

15. Device according to claim 14, comprising
- means for adding said piggybacked status PDU before said payload; and
- means for providing said piggybacked status PDU with a super field, SUFI, indicating the length of said piggybacked status PDU.

16. Device according to claim 14, comprising
- means for adding a short Length Indicator, sLI, to said RLC PDU, indicating the length of said piggybacked status PDU; and
- means for adding said piggybacked status PDU after said payload.

17. Device according to anyone of claims 14 to 16, comprising
- means for padding said piggybacked status PDU.

18. Device according to anyone of claims 14 to 17, comprising
- means for performing at least one further operation on said RLC PDU that would require setting said HE field to a functional value; and
- means for using said aHE field instead of said HE field for setting said functional value.

19. Device according to anyone of claims 14 to 18, comprising
- means for adding said aHE field by re-using bits of a header of said piggybacked status PDU.

20. Device for processing a Radio Link Control, RLC, PDU, comprising
- means for receiving an RLC PDU comprising a payload section and a header section including a Header Extension, HE, field;
- means for receiving size information related to said RLC PDU;
- means for determining the size of said piggybacked status PDU, if said HE field is set to a pre-determined value indicating the presence of a piggybacked status PDU in said RLC PDU; and
- means for determining the size of said payload based on said received size information and said determined piggybacked status PDU size.

21. Device according to claim 20, wherein said piggybacked status PDU is located before said payload, the device comprising
- means for determining the size of said piggybacked status PDU based on a SUFI included in and indicating the length of said piggybacked status PDU.

22. Device according to claim 20, comprising
- means for determining of the size of said piggybacked status PDU based on an sLI included in said RLC PDU and indicating the length of said piggybacked status PDU, wherein said piggybacked status PDU is located after said payload.

23. Device according to claim anyone of claims 20 to 22, wherein said piggybacked status PDU comprises padding, the device comprising
- means for determining the size of said payload based on said padding.

24. Device according to claim 20 to 23, wherein said HE field being set to a pre-determined value further indicates the presence of an aHE field, the device comprising
- means for performing at least one further processing operation on said RLC PDU that would invole reading out a functional value from said HE field; and
- means for reading out said functional value from said aHE field instead of said HE field.

25. Device according to claim, wherein said piggybacked status PDU comprises a header, the device comprising
- means for reading out said aHE field from said header of said piggybacked status PDU.
